# EUROPEAN PATENT SPECIFICATION

(11) **EP 1 325 846 B1**
(45) Date of publication and mention of the grant of the patent: **25.08.2004**
(21) Application number: 02023680.8
(22) Date of filing: 22.10.2002
(51) Int. Cl.: B60R 21/045, B60R 21/20

(54) **Air bag system for protecting the knees of a driver**
Luftsackmodul zum Schützen der Knie eines Fahrers
Système à sac gonflable pour la protection des genoux d'un conducteur

(30) Priority: 19.12.2001 KR 2001081096
(43) Date of publication of application: 09.07.2003
(73) Proprietor: HYUNDAI MOTOR COMPANY, Seoul (KR)
(72) Inventor: Chang, Hong-Sik, Kwangjin-Gu Seoul 143-192 (KR)
(74) Representative: Reinhard - Skuhra - Weise & Partner

(56) References cited:
- PATENT ABSTRACTS OF JAPAN vol. 018, no. 669 (M-1725), 16 December 1994 (1994-12-16) -& JP 06 262999 A (NISSAN MOTOR CO LTD), 20 September 1994 (1994-09-20)

## Description

### FILED OF THE INVENTION

The present invention relates to an air bag system for protecting the knees of a driver, and more particularly, to an air bag system adapted to effectively protect a driver's knees from articles such as steering column and the like in the event of a head-on collision or offset collision.

### BACKGROUND OF THE INVENTION

In general, an air bag system serves to maximally reduce injury to occupants of a vehicle by being inflated toward the occupants in the event of a head-on collision or offset collision to a moving vehicle. The air bag for the driver is typically disposed inside a steering wheel while the air bag for an assistant driver' seat is equipped inside a dash panel.

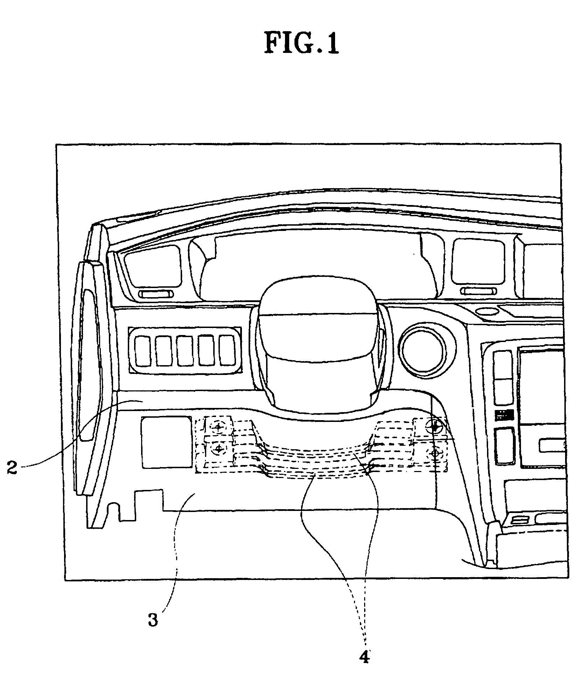

Meanwhile, in the prior art illustrated in FIG. 1, a plurality of knee protection brackets 4 are mounted on the lower crash pad 3 on the driver's side for protecting the driver's knees. However, there is a problem in the structure thus described in that the driver's knees are protected only in a head-on collision and not in an offset collision.

Although the driver's knees usually move toward the lower crash pad 3 with a predetermined turning radius when the vehicle is involved in a head-on collision to allow the knee protection brackets to absorb the impact, the knees often hit a shroud panel 2 encompassing a steering column 1 because the knees move not only to the front of the vehicle but in the lateral direction in the event of an off-set collision.

When the driver's knees hit the shroud panel 2, the shroud panel 2 minimally absorbs the force of impact on the driver's knees, thereby resulting in injury to the driver's knees.

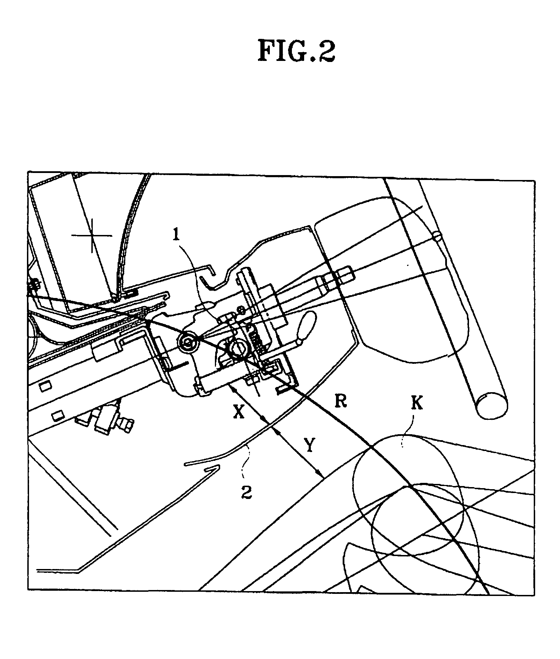

In consideration of the aforementioned problems, a method has been considered to mount a member at the shroud panel 2 for absorbing the impact. However, as illustrated in Figure 2, the distance covered by a driver's knees toward the shroud panel 2 along a predetermined turning radius(R) is approximately 80 mm although the distance varies according to the extent of an accident, such that in order to effectively protect the driver's knees moving toward the shroud panel 2, a space (X) exceeding 80mm or more between the steering column 1 and the shroud panel 2 must be obtained. However, there is a problem in the obtainment of the space (X) between the steering column 1 and the shroud Panel 2 at 80 mm or more thus described in that the distance (Y) between the shroud panel 2 and the driver's knees (K) is relatively reduced causing the driver's knees (K) to get interfered with the shroud panel 2, thereby resulting in inconvenience to the driver when he or she enters and exists the vehicle or manipulates the pedals.

An air bag system according to the preamble of claim 1 is disclosed in JP 06 262 999 A.

### SUMMARY OF THE INTENTION

The present invention provides an air bag system adapted to effectively protect the knees of a driver from rigid articles such as a steering column and the like in the event of a head-on collision or an off-set collision, thereby protecting the driver's knees. Such an air bag system is defined by the features of claim 1.

### BRIEF DESCRIPTION OF THE DRAWINGS

For fuller understanding of the nature and objects of the invention, reference should be made to the following detailed description taken in conjunction with the accompanying drawings in which:
FIG. 1 is a schematic diagram illustrating knee protection brackets mounted at a lower crash pad at a driver's seat according to the prior art;
FIG. 2 is a cross-sectional view illustrating a moving status of driver's knees in the event of an offset collision;
FIG. 3 is a longitudinal cross-sectional view for illustrating an air bag system for protecting the knees of a driver according to the present invention;
FIG. 4 is a detailed drawing illustrating the principal parts of FIG. 3; and
FIG. 5 is an operational state drawing of an air bag system for protecting the knees of a driver according to the present invention.

### DETAILED DESCRIPTION OF THE INVENTION

Hereinafter, the preferred embodiments of the present invention will be described in detail with reference to the accompanying drawings.

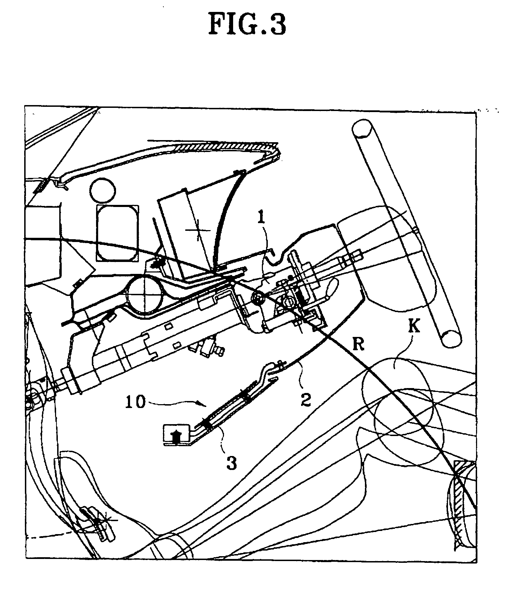

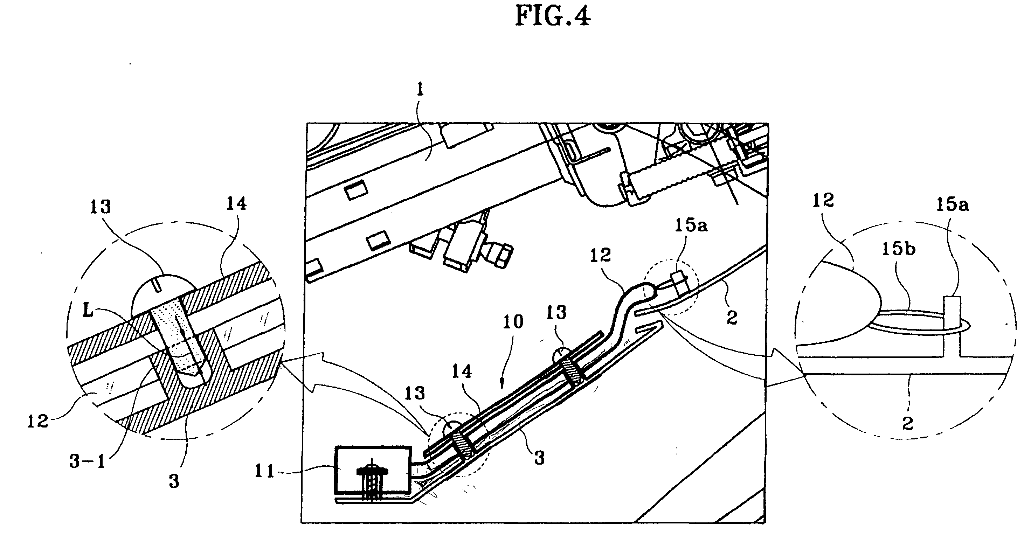

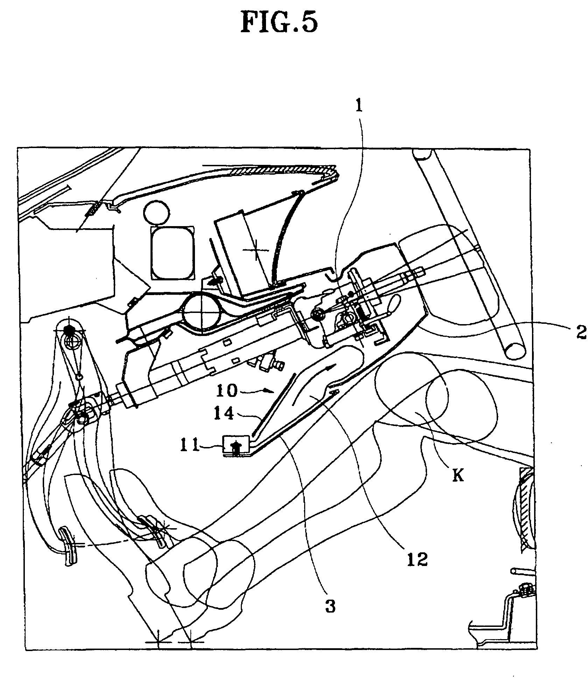

In FIGs. 3, 4 and 5, like reference numerals are used for designation of like or equivalent parts or portions as in the prior art for simplicity of illustration and explanation.

Inside the lower crash pad 3 and shroud panel 2, there is equipped an air bag 12 in sprawled fashion, the lower portion of the air bag 12 is secured to the inner surface of the lower crash pad 3 while the upper portion thereof is connected thereon to the inner surface of the shroud panel 2.

The air bag 12 is connected to an inflator unit 11 for inflating the air bag 12 in response to a control signal sent from an air bag control unit (not shown). The inflator unit 11 is mounted at the inner surface of the lower crash pad 3 to be connected to the lower portion of the air bag 12, as illustrated in the drawings.

A ring 156 provided at the upper end of the air bag 12 is hitched and fixed at a hitching protruder 15a formed at an inner surface of the shroud panel 2. The purpose of the ring 15b being hitched at the hitching protruder 15a is to make it easy for the upper end of the air bag 12 to be secured at the shroud panel 2 when the air bag 12 is mounted. This also makes it easy for the upper end of the air bag 12 to be expanded into the shroud panel 2 when the air bag 12 is inflated.

In other words, the fixed structure between the ring 15b and the hitching protruder 15a thus described prompts the air bag 12 to be easily separated when the air bag 12 is inflated, thereby causing no hindrance to the expansion of the air bag 12, and in ordinary times, allows the upper end of the air bag 12 to be secured at the shroud panel 2 while also acting as a guide for the expanded air bag 12 to be directed into the inner side of the shroud panel 2 in an emergency.

An air bag cover 14 is installed at a lateral surface facing the steering column 1 of the air bag 12. The air bag cover 14 is mounted at an inner lateral surface of the lower crash pad 3 for encompassing the air bag12, such that when the air bag 12 is inflated, the air bag 12 is prevented from being destructed by the steering column 1 and other peripheral parts.

The fixing means for securing the air bag cover 14 to the lower crash pad 3 is so arranged to secure the air bag cover 14 to the lower crash pad 3 with a supporting force smaller than the expanding force of the air bag 12 generated when the air bag 12 is expanded by the inflator unit 11. In the present embodiment, a threaded protruder L at a screw 13 which passes the air bag cover 14 for coupling and threading into a boss 3-1 formed at the lower crash pad 3 is shortened in length thereof, enabling the threaded coupling between the screw 13 and the boss 3-1 to be destructed when the air bag 12 is expanded.

Of course, it may be the possible to use a method where the notch is formed at the boss 3-1 or at the screw 13, enabling an easy destruction structurally, in addition to the above-mentioned method.

Hereinafter, the operation of the present invention thus constructed will be described.

First, in the event of a head-on collision or an offset collision, an impact sensor mounted at the vehicle detects the impact and sends a signal to the air bag control unit which in turn analyzes the signal transmitted from the impact sensor to determine whether the impact force is strong enough to cause injury to the occupants.

At this time, when the air bag control unit determines that the impact force is strong enough to harm the passengers, the air bag control unit activates the air bag system disposed inside the steering wheel and simultaneously activates the inflator unit 11 mounted at the inner side of the lower crash pad 3.

As a result, the air bag 12 connected to the inflator unit 11 is expanded by gas generated in the course of activation of the inflator unit 11. The upper side of the air bag 12 is expanded from the fixed state by the ring 15b and the hitching protruder 15a at the shroud panel 2 to thereby fill out the inner side of the shroud panel naturally.

Of course, the ring 15b is naturally detached from the hitching protruder 15a in response to expansion of the air bag 12 such that the ring 15b and the hitching protruder 15a do not interfere with the expansion of the air bag 12.

According as the air bag 12 is expanded, a coupled portion between the screw 13 and the boss 3-1 is destructed by the expansion force of the air bag 12 to allow an sufficient space for the air bag 12 to be inflated between the air bag cover 14 and the lower crash pad 3.

In other words, when human body parts such as the driver's knees and the like bump against the lower crash pad 3 or the shroud panel 2 while the air bag 12 is expanded inside the lower crash pad 3 and the shroud panel 2, the impact force generated therefrom is absorbed by the air bag 12 to minimize injury to the driver.

As apparent from the foregoing, there is an advantage in the air bag system for protecting the knees of a driver thus described according to the present invention in that an air bag is disposed at a lower crash pad and at a shroud. panel, which expands in the event of a collision. The air bag. absorbs the impact generated and effectively protects the knees and shins of a driver when a head-on collision or an offset collision occurs, thereby minimizing injury of the driver.

## Claims

1. An air bag system for protecting the knees of a driver, the system comprising:
an air bag (12) secured at a lower side to an inner surface of a lower crash pad (3) and secured at an upper end to an inner surface of a shroud panel (2);
an inflator unit (11) connected to the air bag (12) for inflating said air bag (12) in response to a control signal;
an air bag cover (14) mounted at an inner surface of the lower crash pad (3), said air bag being mounted between said cover (14) and said lower crash pad (3), said cover preventing destruction of said air bag (12); and
a ring (15b) mounted at an upper end of the air bag (12), said ring being hitched at a hitching protuder (15a) provided at an inner surface of the shroud panel (2), said ring securing said air bag to said inner surface of the shroud panel said ring being detached in response to expansion of said air bag.

2. The system as defined in claim 1, wherein the inflator unit (11) is disposed at the inner surface of said lower crash pad (3).

3. The system as defined in claim 1, wherein the air bag cover (14) is installed at said lower crash pad (3) by a fixing means (L, 13) for securing said air bag (12) to said lower crash pad (3) with a supporting force smaller than expansion force of said air bag (12) generated when said air bag (12) is expanded by said inflator unit (11).

## Patentansprüche

1. Airbagsystem zum Schützen der Knie eines Fahrers, bestehend aus:
einem Airbag (12), der an einer unteren Seite an einer Innenfläche eines unteren Crash-Pads (3) und an einem oberen Ende an einer Innenfläche eines Abdeckblechs (2) befestigt ist;
einer Aufblaseinheit (11), die mit dem Airbag (12) zum Aufblasen des Airbags (12) abhängig von einem Steuersignal verbunden ist;
einer Airbagabdeckung (14), die an einer Innenfläche des unteren Crash-Pads (3) montiert ist, wobei der Airbag zwischen der Abdeckung (14) und dem unteren Crash-Pad (3) montiert ist, wobei die Abdeckung eine Zerstörung des Airbags (12) verhindert; und
einem Ring (15b), der an einem oberen Ende des Airbags (12) montiert ist, wobei der Ring an einem Haltevorsprung (15a) angreift, der an einer Innenfläche des Abschirmblechs (2) vorgesehen ist, wobei der Ring den Airbag an der Innenfläche des Abdeckblechs sichert, und wobei der Ring abhängig von der Expansion des Airbags lösbar ist.

2. System nach Anspruch 1, bei dem die Aufblaseinheit (11) an einer Innenfläche des unteren Crash-Pads (3) angeordnet ist.

3. System nach Anspruch 1, bei dem die Airbagabdeckung (14) an dem unteren Crash-Pad (3) mittels einer Befestigungseinrichtung (L, 13) zur Befestigung des Airbags (12) an dem unteren Crash-Pad (3) mit einer Haltekraft installiert ist, die geringer als die beim Expandieren des Airbags (12) durch die Aufblaseinheit (11) erzeugte Expansionskraft des Airbags (12) ist.

## Revendications

1. Système de sac gonflable pour protéger les genoux d'un conducteur, le système comprenant :
un sac gonflable (12) fixé au niveau d'un côté inférieur à une surface intérieure d'un rembourrage de sécurité inférieur (3) et fixé au niveau d'une extrémité supérieure à une surface intérieure d'un panneau de carénage (2) ;
une unité de gonflage (11) reliée au sac gonflable (12) pour gonfler ledit sac gonflable (12) en réponse à un signal de commande ;
un couvercle de sac gonflable (14) monté au niveau d'une surface intérieure du rembourrage de sécurité inférieur (3), ledit sac gonflable étant monté entre ledit couvercle (14) et ledit rembourrage de sécurité inférieur (3), ledit couvercle empêchant la destruction dudit sac gonflable (12) ; et
un anneau (15b) monté au niveau d'une extrémité supérieure du sac gonflable (12), ledit anneau étant accroché à une saillie d'accrochage (15a) disposée au niveau d'une surface intérieure du panneau de carénage (2), ledit anneau fixant ledit sac gonflable à ladite surface intérieure du panneau de carénage, ledit anneau étant détaché en réponse à l'expansion dudit sac gonflable.

2. Système selon la revendication 1, dans lequel l'unité de gonflage (11) est disposée au niveau de la surface intérieure dudit rembourrage de sécurité inférieur (3).

3. Système selon la revendication 1, dans lequel le couvercle de sac gonflable (14) est installé au niveau dudit rembourrage de sécurité inférieur (3) par un moyen de fixation (L, 13) pour fixer ledit sac gonflable (12) audit rembourrage de sécurité inférieur (3) avec une force de support inférieure à la force d'expansion dudit sac gonflable (12) produite quand ledit sac gonflable (12) est gonflé par ladite unité de gonflage (11).
